# DEMANDE DE BREVET EUROPEEN

(11) **EP 1 772 227 A1**
(43) Date de publication de la demande: **11.04.2007**
(21) Numéro de dépôt: 06121221.3
(22) Date de dépôt: 25.09.2006
(51) Int. Cl.: B23K 101/34

(54) **Procédé de soudage d'une tôle sandwich sur une face métallique d'un organe**

(30) Priorité: 05.10.2005 FR 0510187
(71) Demandeur: Valeo Systèmes Thermiques, 78321 Le Mesnil St Denis Cedex (FR)
(72) Inventeur: TRUILLET, Franck, 28410 Bu (FR); MEDINA, Mathieu, 78000 Versailles (FR); DROULEZ, Eric, 92150 Suresnes (FR); MORELLE, Jean-Michel, 45190 Beaugency (FR); VIVET, Laurent, 78390 Bois d`Arcy (FR)
(74) Mandataire: Léveillé, Christophe

(57) **Abrégé**

Ce procédé s'applique au soudage d'une tôle sandwich (12) comportant des première (40) et seconde (42) tôles métalliques entre lesquelles est intercalée une couche (44) en matériau polymère sur une face métallique d'un organe (14). On superpose la seconde tôle métallique (42) de la tôle sandwich (12) sur la face métallique de l'organe (14) et on chauffe la seconde tôle métallique (42) de façon à provoquer localement sa fusion. A cet effet, on dirige un faisceau laser sur un point (54) de la première tôle métallique (40) de façon à ce que ce faisceau laser traverse la première tôle (12) par perforation de cette première tôle et traverse la couche en matériau polymère (44) par transparence de cette couche et enfin atteigne et chauffe la seconde tôle métallique (42).

## Description

La présente invention concerne un procédé de soudage d'une tôle sandwich sur une face métallique d'un organe et un élément pour véhicule automobile.

De façon connue en soi, une tôle sandwich comprend deux tôles métalliques entre lesquelles est intercalée une couche en matériau polymère.

Les tôles sandwich ont des propriétés d'amortissement des vibrations qui sont mises à profit en particulier pour réduire la propagation du bruit.

Ainsi, les tôles sandwich sont utilisées notamment pour la fabrication d'éléments de corps ou de carrosserie de véhicule automobile.

Lors de la fabrication d'éléments de corps ou de carrosserie de véhicule automobile, il est parfois nécessaire d'assembler une tôle sandwich sur une face métallique d'un autre organe, par exemple une autre tôle sandwich.

Il est connu d'assembler la tôle sandwich et l'organe par collage de l'une des tôles métalliques de la tôle sandwich sur la face métallique de l'organe.

Cependant, un tel procédé d'assemblage est relativement coûteux car nécessitant l'utilisation d'une colle adaptée à l'assemblage de matériaux métalliques, par exemple une colle de type colle époxy.

Par ailleurs, cette colle forme un joint relativement peu résistant aux élévations de température et aux vibrations auxquelles est soumise notamment un élément de carrosserie de véhicule automobile si bien qu'il est souvent nécessaire de renforcer le collage par un rivetage.

Par conséquent, ce procédé d'assemblage est inadapté aux exigences de coût et de fiabilité de l'assemblage d'éléments d'un véhicule automobile.

Une solution plus économique consiste à assembler la tôle sandwich sur l'organe par soudage d'une des deux tôles métalliques sur la face métallique de l'organe.

Ainsi, on connaît déjà dans l'état de la technique un procédé de soudage d'une tôle sandwich, comportant des première et seconde tôles métalliques entre lesquelles est intercalée une couche en matériau polymère, sur une face métallique d'un organe, du type dans lequel on superpose la seconde tôle métallique de la tôle sandwich sur la face métallique de l'organe et on chauffe la seconde tôle métallique de façon à provoquer localement sa fusion.

Afin de chauffer la seconde tôle métallique, on applique une source de chaleur sur la première tôle métallique de façon que la chaleur émise par cette source se propage, essentiellement par conduction, à travers la première tôle métallique et la couche en matériau polymère jusqu'à atteindre la seconde tôle métallique.

Cependant, la couche en matériau polymère ayant des propriétés d'isolant thermique, il est parfois nécessaire d'exposer cette couche à un échauffement prolongé pour provoquer la fusion de la seconde tôle métallique.

Or, un échauffement de la couche en matériau polymère trop important risque de provoquer sa combustion. Cette combustion peut produire une émission de gaz carbonique altérant la soudure entre les deux tôles.

L'invention a notamment pour but de proposer un procédé de soudage d'une tôle sandwich sur une face métallique d'un organe, telle qu'une autre tôle sandwich ne dégradant pas ou peu la couche en matériau polymère et permettant de former une soudure de qualité.

A cet effet, l'invention a pour objet un procédé de soudage d'une tôle sandwich sur une face métallique d'un organe du type précité, caractérisé en ce que l'on dirige un faisceau laser sur un point de la première tôle métallique de façon à ce que ce faisceau laser :
- traverse la première tôle par perforation de cette première tôle,
- traverse la couche en matériau polymère par transparence de cette couche,
- atteigne et chauffe la seconde tôle métallique.

Ainsi, le faisceau laser est transmis à travers un trou de passage formé par perforation de la première tôle, puis à travers la couche en matériau polymère, sans être absorbé par le matériau polymère. L'échauffement de la couche en matériau polymère est de ce fait très limité.

Le faisceau laser, après traversée par transparence de la couche en matériau polymère, est alors absorbé par la seconde tôle métallique provoquant l'échauffement, puis la fusion de la seconde tôle métallique. Après refroidissement, la soudure obtenue entre la tôle sandwich et l'organe est relativement résistante.

Plus particulièrement, le faisceau laser étant émis par une source d'impulsions d'intensité et de durée réglables, on effectue un premier réglage de la durée et l'intensité des impulsions afin, dans un premier temps, de perforer la première tôle métallique puis, on effectue un second réglage afin, dans un second temps, de chauffer et de faire fondre localement la seconde tôle métallique.

Dans un mode de réalisation particulier du procédé de soudage selon l'invention, on intercale, entre la seconde tôle métallique de la tôle sandwich et l'organe, une couche de métal d'apport formant brasure.

Ce mode de réalisation est particulièrement bien adapté à une tôle sandwich dont la seconde tôle métallique est formée dans un matériau ne permettant pas une soudure autogène, par exemple un matériau contenant du zinc.

Plus précisément, la seconde tôle est formée dans un matériau contenant du zinc, la couche de métal d'apport ayant une température de fusion inférieure à la température d'évaporation du zinc.

Ainsi, la seconde tôle est formée, par exemple, dans un alliage de zinc et d'acier. Comme la température de vaporisation du zinc est très inférieure à la température de fusion de l'acier, le zinc, en se vaporisant, va former des porosités pouvant altérer la soudure.

En intercalant une couche de métal d'apport ayant une température de fusion inférieure à la température d'évaporation du zinc, la fusion de cette couche assure la formation d'une soudure résistante même si le matériau formant la seconde tôle métallique contient du zinc.

De façon avantageuse, on peut également choisir la couche de métal d'apport de telle sorte qu'elle ait une température de fusion inférieure à la température de fusion de la seconde tôle métallique.

Ainsi, on limite l'échauffement de la couche en matériau polymère, la quantité de chaleur nécessaire à la fusion de la couche de métal d'apport étant moins importante que celle nécessaire à la fusion de la seconde tôle métallique.

Un procédé de soudage selon l'invention peut en outre comporter l'une ou plusieurs des caractéristiques suivantes :
- on dirige successivement le faisceau laser sur des points de la première tôle métallique afin de former plusieurs trous de perforation de cette première tôle et autant de points de soudure répartis dans une zone ayant une forme générale de disque ;
- on dirige successivement le faisceau laser sur des points de la première tôle métallique afin de former plusieurs trous de perforation de cette première tôle et autant de points de soudure répartis dans une zone ayant une forme générale de bande en zigzag ;
- l'organe est également une tôle sandwich.

L'invention a également pour objet un élément pour véhicule automobile,
caractérisé en ce qu'il comprend une tôle sandwich et un organe comprenant une face métallique assemblés par un procédé de soudage selon l'invention.

L'invention sera mieux comprise à la lecture de la description qui va suivre, donnée uniquement à titre d'exemple et faite en se référant aux dessins dans lesquels :
- la figure 1 est une vue en perspective d'un élément de véhicule automobile selon l'invention ;
- la figure 2 est une vue en coupe suivant le plan II de la figure 1 ;
- les figures 3 à 7 sont des vues en coupe de parties de deux tôles sandwich formant l'élément représenté sur la figure 1, illustrant différentes étapes d'un procédé de soudage selon un mode particulier de réalisation de l'invention ;
- les figures 8 et 9 illustrent deux répartitions possibles de trous de perforation formés, conformément au procédé de soudage selon l'invention, sur une des tôles sandwich représentées sur les figures 3 à 7.

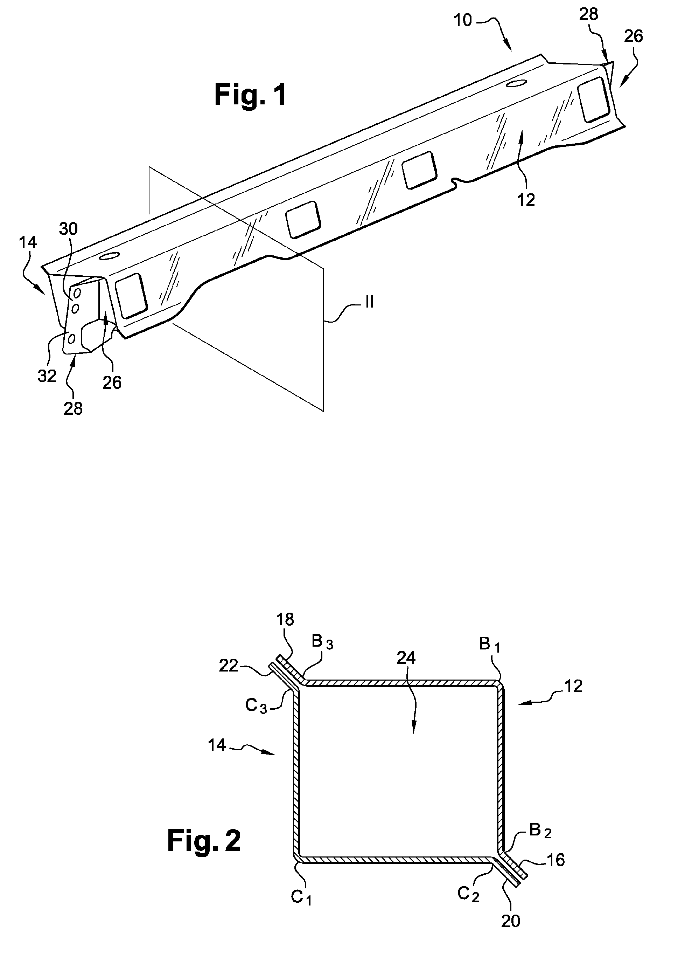

On a représenté sur la figure 1, un élément 10 pour véhicule automobile.

Dans l'exemple illustré, l'élément 10 est une traverse de planche de bord.

De façon connue en soi, la traverse de planche de bord 10 forme un support de différents organes fonctionnels du véhicule automobile, tels qu'un tableau de bord, une colonne de direction, un sac gonflable, des moyens de chauffage ou de climatisation (non représentés).

La traverse de planche de bord 10, en forme générale de caisson, comprend deux demi-coques 12, 14 formées chacune par une tôle sandwich 12, 14.

Chaque tôle sandwich 12, 14 est pliée sensiblement à angle droit suivant une ligne de pliage longitudinale B1, C1.

Chaque tôle sandwich 12, 14 est également pliée selon deux lignes de pliage longitudinales B2, B3, C2, C3 de façon à délimiter deux bords longitudinaux de jonction 16, 18,20,22.

Les tôles sandwich 12 et 14 sont assemblées entre elles par superposition des bords de jonction 16 et 18 de la tôle 12 respectivement sur les bords de jonction 20 et 22 de la tôle 14 et soudage de ces bords de jonction.

Une fois assemblées, les tôles sandwich 12 et 14 forment un corps creux 24 allongé de section sensiblement rectangulaire (figure 2), pouvant notamment être mis à profit pour loger, par exemple, un organe (non représenté) destiné à distribuer de l'air dans l'habitacle. Habituellement, cet organe est formé dans un matériau polymère.

On voit également sur la figure 1 que la traverse 10 comporte deux extrémités 26 destinées à être reliées à une caisse de véhicule automobile (non représentée).

A cet effet, chaque extrémité 26 comporte un flasque métallique 28 formant un organe de fixation de la traverse sur la caisse du véhicule.

Dans l'exemple illustré, le flasque 28 comprend une première partie 30 soudée à la traverse 10 et une seconde partie 32 destinée à être fixée, par exemple par rivetage, à la caisse du véhicule automobile.

Les bords de jonction 16 et 20 ainsi que les bords de jonction 18 et 22 sont soudés entre eux grâce à un procédé de soudage selon l'invention.

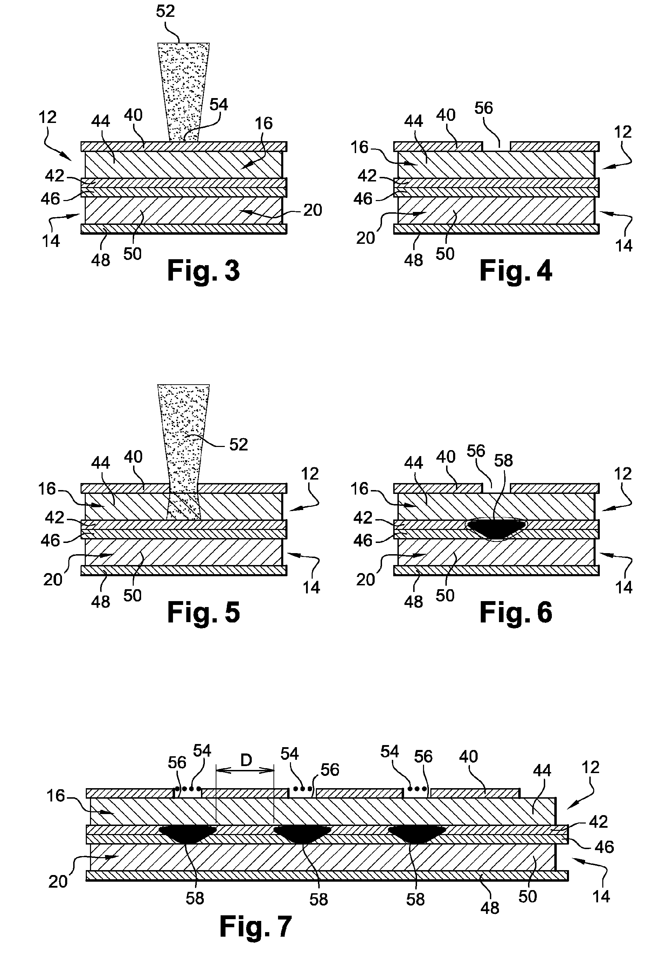

On décrira ci-dessous, en référence aux figures 3 à 9, un exemple de réalisation de ce procédé de soudage appliqué aux bords de jonction 16, 20 des tôles sandwich 12, 14.

On a représenté schématiquement, sur la figure 3, les bords de jonction 16 et 20 respectivement des tôles sandwich 12 et 14.

De façon classique, la tôle sandwich 12 comprend des première 40 et seconde 42 tôles métalliques entre lesquelles est intercalée une couche 44 en matériau polymère.

De façon analogue, la tôle sandwich 14 comprend des première 46 et seconde 48 tôles métalliques entre lesquelles est intercalée une couche 50 en matériau polymère.

Conformément au procédé de l'invention, on superpose la seconde tôle métallique 42 de la tôle sandwich 12 sur une face métallique de la tôle sandwich 14.

Puis, pour souder les bords de jonction 16 et 20 entre eux, on dirige un faisceau laser 52 sur un point 54 de la première tôle métallique 40.

La source émettant le faisceau laser 52 est par exemple du type laser Nd :YAG (laser à grenat d'yttrium et d'aluminium dopé au néodyme). Une telle source émet un rayonnement dans le spectre infrarouge proche, en général autour de la longueur d'onde de 1 micron. Or, la plupart des matériaux transparents à un rayonnement dans le spectre visible sont également transparents à un rayonnement dans le spectre infrarouge proche. Ainsi, un matériau polymère transparent à un rayonnement dans le spectre visible conviendra.

De préférence, le faisceau laser 52 est émis par une source d'impulsions d'intensité et de durée réglables. On distingue essentiellement deux temps au cours desquels les réglages du faisceau sont différents.

Dans un premier temps, on effectue un premier réglage de la durée et de l'intensité des impulsions afin de perforer la première tôle métallique 40 si bien que le faisceau laser 52 traverse la première tôle 40 à travers un trou de perforation 56 de cette première tôle 40 (figure 4).

Par exemple, pour perforer une tôle métallique en acier de quelques millimètres d'épaisseur, une impulsion d'une milliseconde de durée et de deux mille watts de puissance est suffisante. Le trou de perforation 56 a environ quatre cent micromètres de diamètre et est de ce fait visible par un oeil humain.

Le faisceau laser 52 traverse la couche en matériau polymère 44 par transparence de cette couche (figure 5).

Dans un second temps, on effectue un second réglage de la durée et de l'intensité des impulsions du faisceau afin de chauffer et faire fondre localement la seconde tôle métallique 42.

Ainsi, le faisceau laser 52 atteint, sans endommager la couche en matériau polymère 44, la seconde tôle métallique 42 qui, contrairement à la couche en matériau polymère 44, absorbe l'énergie transmise par le faisceau laser 52 réglé conformément au second réglage.

Ainsi, le faisceau laser 52 chauffe la seconde tôle métallique 42 de façon à provoquer localement sa fusion (figure 6).

Par exemple, pour chauffer et faire fondre localement une tôle métallique en acier de quelques millimètres d'épaisseur, une impulsion de dix à vingt millisecondes et de deux mille watts de puissance est suffisante.

De préférence, on dirige successivement le faisceau laser 52 sur des points 54 successifs de la première tôle métallique 40 afin de former plusieurs trous de perforation 56 de cette première tôle 40 et autant de points de soudure 58 (figure 7).

Afin d'éviter un endommagement de la couche en matériau synthétique 44 provoqué par un échauffement excessif de la seconde tôle métallique 42, on dirige successivement le faisceau laser 52 sur des points 54 espacés de telle sorte de maintenir une distance minimale D entre deux points de soudure 58.

Dans l'exemple décrit, les points de soudure 58 sont espacés d'une distance D d'environ un millimètre.

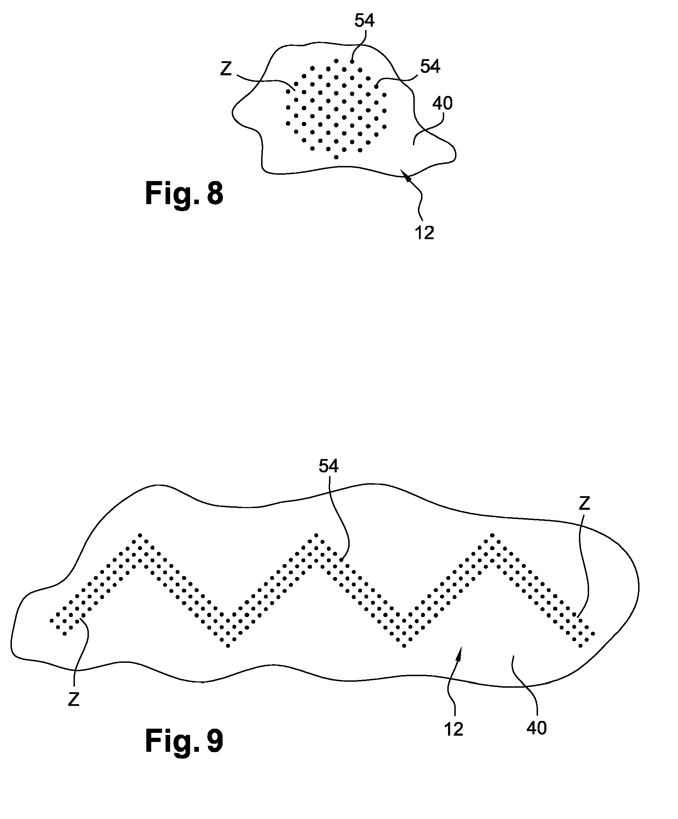

De façon avantageuse, les points de soudure 58 sont répartis dans une zone Z ayant une forme générale de disque (figure 8).

Par exemple, en respectant la distance minimale D entre chaque point de soudure 58, un disque de dix millimètres de diamètre peut comporter environ soixante points de soudure.

De préférence, on reproduit plusieurs zones Z en forme générale de disque en les espaçant régulièrement ou non sur le bord 16 de la tôle sandwich 12.

En variante, les points de soudure 58 sont répartis dans une zone Z ayant une forme générale de bande en zigzag (figure 9) de sorte à former une soudure quasi-continue entre les deux tôles 12 et 14.

Dans le mode de réalisation illustré, la seconde tôle métallique 42 est en acier ou en cuivre, de sorte qu'il n'est pas nécessaire d'apporter de la matière pour réaliser la soudure des deux tôles sandwich 12 et 14.

Dans un autre mode de réalisation de l'invention (non représenté), on intercale, entre la seconde tôle métallique 42 et la tôle sandwich 14 une couche de métal d'apport formant brasure.

Ce mode de réalisation est particulièrement bien adapté lorsqu'un soudage sans apport de matière est difficilement réalisable.

Ainsi, lorsque la seconde tôle 42 est formée dans un matériau contenant du zinc, un soudage sans apport de matière est difficilement réalisable du fait de la relativement faible température de vaporisation du zinc.

C'est la cas, notamment, lorsque le matériau formant la seconde tôle 42 est un alliage de zinc et d'acier.

Dans le cas, de façon avantageuse, la couche de métal d'apport a une température de fusion inférieure à la température d'évaporation du zinc. Ainsi, la fusion, puis le refroidissement de la couche de métal d'apport forme une soudure sans impureté même si la seconde tôle métallique 42 et la couche de métal d'apport contiennent du zinc.

Ce mode de réalisation est également avantageux lorsque l'on souhaite limiter l'échauffement de la couche en matériau polymère 44, lors de la fusion du matériau formant la seconde tôle métallique 42.

En effet, on peut choisir une couche de métal d'apport ayant une température de fusion inférieure à la température de fusion de la seconde tôle métallique 42.

Par exemple, la seconde tôle métallique 42 étant formée en acier ou en cuivre, on peut choisir une couche de métal d'apport en étain.

Ainsi, on limite l'échauffement de la couche en matériau polymère 44, la quantité de chaleur nécessaire à la fusion de la couche de métal d'apport étant moins importante que celle nécessaire à la fusion de la seconde tôle métallique 42.

L'invention ne se limite pas aux modes de réalisation décrits ci-dessus.

En particulier, le procédé de l'invention s'applique également au soudage d'une tôle sandwich sur une face métallique d'un organe qui n'est pas nécessairement une tôle sandwich. On superpose alors la seconde tôle métallique de la tôle sandwich sur la face métallique de l'organe.

Par exemple, les flasques 28 peuvent être soudés aux tôles 12 et 14 selon le procédé de soudage selon l'invention.

## Revendications

1. Procédé de soudage d'une tôle sandwich (12), comportant des première (40) et seconde (42) tôles métalliques entre lesquelles est intercalée une couche (44) en matériau polymère, sur une face métallique d'un organe (14), du type dans lequel on superpose la seconde tôle métallique (42) de la tôle sandwich (12) sur la face métallique de l'organe (14) et on chauffe la seconde tôle métallique (42) de façon à provoquer localement sa fusion, **caractérisé en ce que** l'on dirige un faisceau laser (52) sur un point (54) de la première tôle métallique (40) de façon à ce que ce faisceau laser (52) :
- traverse la première tôle (40) par perforation de cette première tôle,
- traverse la couche en matériau polymère (44) par transparence de cette couche,
- atteigne et chauffe la seconde tôle métallique (42).

2. Procédé d'assemblage selon la revendication 1, dans lequel le faisceau laser (52) étant émis par une source d'impulsions d'intensité et de durée réglables, on effectue un premier réglage de la durée et de l'intensité des impulsions afin, dans un premier temps, de perforer la première tôle métallique (12) puis, on effectue un second réglage afin, dans un second temps, de chauffer et de faire fondre localement la seconde tôle métallique (14).

3. Procédé d'assemblage selon la revendication 1 ou 2, dans lequel on dirige successivement le faisceau laser (52) sur des points (54) de la première tôle métallique (12) afin de former plusieurs trous (56) de perforation de cette première tôle (12) et autant de points de soudure (58) répartis dans une zone ayant une forme générale de disque.

4. Procédé d'assemblage selon la revendication 1 ou 2, dans lequel on dirige successivement le faisceau laser (52) sur des points (54) de la première tôle métallique afin de former plusieurs trous de perforation (56) de cette première tôle (12) et autant de points de soudure (58) répartis dans une zone ayant une forme générale de bande en zigzag.

5. Procédé d'assemblage selon l'une quelconque des revendications 1 à 4, dans lequel on intercale, entre la seconde tôle métallique (42) de la tôle sandwich (12) et l'organe (14), une couche de métal d'apport formant brasure.

6. Procédé de soudage selon la revendication 5, dans lequel la seconde tôle métallique (42) est formée dans un matériau contenant du zinc, la couche de métal d'apport ayant une température de fusion inférieure à la température d'évaporation du zinc.

7. Procédé de soudage selon la revendication 5 ou 6, dans lequel la couche de métal d'apport formant brasure a une température de fusion inférieure à la température de fusion de la seconde tôle métallique (42).

8. Procédé d'assemblage selon l'une quelconque des revendications 1 à 7, dans lequel l'organe (14) est également une tôle sandwich.

9. Elément pour véhicule automobile, **caractérisé en ce qu'**il comprend une tôle sandwich (12) et un organe (14) comprenant une face métallique assemblés par un procédé de soudage selon l'une quelconque des revendications précédentes.
